(19) Europäisches Patentamt
European Patent Office
Office européen des brevets

(11) Veröffentlichungsnummer: **0 086 533**
**B1**

# (12) EUROPÄISCHE PATENTSCHRIFT

(45) Veröffentlichungstag der Patentschrift: **29.05.85**

(51) Int. Cl.⁴: **C 03 B 37/025**

(21) Anmeldenummer: **83200191.1**

(22) Anmeldetag: **07.02.83**

## (54) Verfahren zur Herstellung von fluordotierten Lichtleitfasern.

(30) Priorität: **15.02.82 DE 3205345**

(43) Veröffentlichungstag der Anmeldung: **24.08.83 Patentblatt 83/34**

(45) Bekanntmachung des Hinweises auf die Patenterteilung: **29.05.85 Patentblatt 85/22**

(84) Benannte Vertragsstaaten: **AT BE CH DE FR GB IT LI LU NL SE**

(56) Entgegenhaltungen:
**FR-A-2 428 618**
**GB-A-2 084 988**
**US-A-4 082 420**
**US-A-4 148 621**

(73) Patentinhaber: **Philips Patentverwaltung GmbH, Billstrasse 80, D-2000 Hamburg 28 (DE)**
(84) Benannte Vertragsstaaten: **DE**

(73) Patentinhaber: **N.V. Philips' Gloeilampenfabrieken, Groenewoudseweg 1, NL-5621 BA Eindhoven (NL)**
(84) Benannte Vertragsstaaten: **BE CH FR GB IT LI LU NL SE AT**

(72) Erfinder: **Bachmann, Peter, Dr., Karlstrasse 55, D-5100 Aachen (DE)**

(74) Vertreter: **Piegler, Harald, Dipl.-Chem. et al, Philips Patentverwaltung GmbH Billstrasse 80 Postfach 10 51 49, D-2000 Hamburg 28 (DE)**

**EP 0 086 533 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von fluordotierten Lichtleitfasern.

Die Verwendung von Fluor als den Brechungsindex erniedrigendes Dotierungsmittel bei der Herstellung von Multimoden-Lichtleitfasern auf Quarzglasbasis ist aus folgenden Druckschriften bekannt:

(1) A. Mühlich, K. Rau, F. Simmat, N. Treber, 1st ECOC, IEE, London 1975
(2) K. Abe, 2nd ECOC, IEE, Paris 1976
(3) DE-PS 2 538 313
(4) D. Küppers, J. Koenings, H. Wilson, 3rd ECOC, München 1977
(5) D. Küppers, J. Koenings, H. Wilson, J. Electrochem. Soc. 125 (1978), 1298
(6) A. Mühlich, K. Rau, N. Treber, 3rd ECOC, München 1977
(7) K. Rau, A. Mühlich, N. Treber, Topical Meeting on Fiber Transmission, IEEE, Williamsburg 1977
(8) DE-OS 2 931 092
(9) B. J. Ainslie, C. R. Day, P. W. France, K. J. Beales, G. R. Newns, Electron. Lett. 15 (1979), 411
(10) J. W. Fleming, V. R. Raju, Electron. Lett. 17 (1981), 867.

Sowohl bei der Herstellung von Quarzglaslichtleitfasern nach dem thermisch aktivierten MCVD-Verfahren (Druckschriften 2, 3, 9) als auch bei plasmaaktivierten (PCVD) Herstellungsprozessen (Druckschriften 4, 5, 6, 7, 10) wird Fluor als Dotierungsmittel eingesetzt. Als Fluorquellen dienen $SiF_4$ (2, 4, 5) $NF_3$, $SF_6$ (8), $CCl_2F_2$ (3, 8) oder auch $CF_4$ (2, 9). Mit dem MCVD-Verfahren ist es möglich, durch Fluordotierung Brechungsindexunterschiede von etwa 0,5% zu erzeugen (2, 3), wobei zur Erzielung dieser Werte große Mengen der jeweiligen Fluorverbindung angeboten werden müssen. Nach (2) wird ein Brechungsindexunterschied von 0,5% erst bei einem Verhältnis $SiF_4/SiCl_4$ von 12 : 1 erreicht, wobei sich der große Überschuß an $SiF_4$ nachteilig auf die Gasphasenabscheidung auswirkt. Fluor wird daher beim MCVD-Prozeß meist nur zusammen mit anderen Dotierungsmitteln angewandt (9, 10). Die Anwendung der Plasmaaktivierung unter Normaldruck (6, 8) und bei niederem Druck (4, 5) ermöglicht die Erzeugung von Brechungsindexunterschieden von 1% (7) bzw. 1,3% (5). Bei diesen ausschließlich mit Fluor dotierten Multimoden-Lichtleitfasern wurden optische Dämpfungen von 2,2 dB/km bei 1060 nm realisiert. Monomode-Lichtleitfasern wurden bisher auf diese Weise nicht hergestellt. Auch sind nach wie vor relativ hohe Konzentrationen der jeweiligen Fluorverbindungen in der Gasphase erforderlich.

Der Erfindung liegt die Aufgabe zugrunde, den Brechungsindexunterschied zu erhöhen und die Menge an anzuwendender Fluorverbindung zu erniedrigen.

Diese Aufgabe wird erfindungsgemäß dadurch gelöst, daß als Fluorquelle bei einem CVD-Verfahren Hexafluorethan ($C_2F_6$) verwendet wird.

Als CVD-Verfahren wird vorzugsweise das Niederdruck-PCVD-Verfahren angewendet, das an sich in der Arbeit von P. Geittner, D. Küppers und H. Lydtin in Appl. Phys. Lett. 28 (1976), Nr. 11, und in der DE-PS 2 444 100 beschrieben ist.

Die Erfindung wird anhand einer Zeichnung näher erläutert. Es zeigt

Fig. 1 eine graphische Darstellung der Abhängigkeit des Brechungsindexunterschieds von der Dotierungsmittel-Konzentration in der Gasphase für verschiedene Verfahren und Dotierungsmittel und

Fig. 2 eine Michelson-Interferenz-Mikrographie von einer Monomoden-Vorform.

In Fig. 1 ist der Brechungsindexunterschied (in Prozent) über der in der Gasphase anwesend gewesenen Dotiermittelkonzentration

$$x = \frac{100\,\dot{Q}_{Dot}}{\dot{Q}_{ges}}$$

aufgetragen, wobei $\dot{Q}_{Dot}$ der Gasfluß des Dotierungsmittels und $\dot{Q}_{ges}$ der Gesamt-Gasfluß bedeuten. Die einzelnen Kurven stellen Werte für folgende Verfahren und Systeme bzw. Dotierungsmittel dar:

1 PCVD-Verfahren, System $GeO_2/SiO_2$
2 MCVD-Verfahren nach Durchschrift (2)
3 Verfahren nach Druckschrift (8), Dotierungsmittel $CCl_2F_2$
4 Verfahren nach Druckschrift (8), Dotierungsmittel $NF_3$
5 Verfahren nach Druckschrift (8), Dotierungsmittel $SF_6$
6 PCVD-Verfahren, System $F/SiO_2$ mit $SiF_4$ als Fluorquelle, Druckschrift 5
7 Monomoden-Vorform, erfindungsgemäß hergestellt
8 PCVD-Verfahren, System $F/SiO_2$ mit $C_2F_6$ als Fluorquelle.

Fig. 1 zeigt, daß es nach der Erfindung möglich ist, durch die Verwendung von $C_2F_6$ (Hexafluorethan; Freon 116) Brechungsindexunterschiede von mehr als 2% zu erzielen. Dies bedeutet eine Steigerung von mehr als 50% gegenüber den bisher erreichten Höchstwerten in Systemen mit reiner Fluordotierung oder reiner Germaniumdioxiddotierung.

Die Erfindung ermöglicht es auch unter ausschließlicher Verwendung von Fluor als Dotierungsmittel optische Lichtleitfasern mit einer numerischen Apertur von mehr als 0,3 herzustellen. Wie Fig. 1 zu entnehmen ist, besteht ein weiterer Vorteil der vorliegenden Erfindung darin, daß bereits bei sehr geringen Konzentrationen des Dotierungsmittels $C_2F_6$ in der Gasphase sehr hohe Brechungsindexunterschiede erzielt werden können. Es wird ein Brechungsindexunterschied von 1% bereits bei einem Verhältnis von $C_2F_6/SiCl_4$ von etwa 0,05 erreicht. Hexafluorethan ist demnach bei der Verwendung gemäß der Erfindung als außerordentlich wirkungsvolle Fluorquelle anzusehen. Bei der erfindungsgemäßen Anwendung von $C_2F_6$ werden Dämpfungswerte von 1,5 dB/km bei 1050 nm erreicht.

Mit Hilfe des PCVD-Verfahrens und unter Verwendung $C_2F_6$ wurden auch Monomode-Lichtleitfasern bestehend aus einem Mantel aus Quarzglas, einer durch Fluordotierung in ihrem Brechungsindex reduzierten Zwischenschicht sowie einem reinen Quarzkern hergestellt.

Fig. 2 zeigt eine Michelson-Interferenz-Mikrographie einer derartigen Monomode-Lichtleitfaser. Diese Monomodefasern bieten den Vorteil, daß der Kern aus reinem Quarzglas besteht und deshalb eine geringere Rayleighstreuung aufweist als Faserkerne mit Dotierung. Außerdem wird die beim Verarbeiten von innen beschichteten Rohren zu Fasern mit dotiertem Kernmaterial auftretende Brechungsindexstörung in der Fasermitte völlig vermieden. Diese Störung wird durch Ausdampfen des Dotierungsmittels aus der inneren Oberfläche des beschichteten Rohres hervorgerufen. Da die gemäß der Erfindung hergestellten innen beschichteten Rohre aber nur Quarz an der inneren Oberfläche aufweisen, tritt die beschriebene Störung nicht mehr auf.

Monomodefasern, die erfindungsgemäß hergestellt wurden, weisen daher eine geringere Biegeempfindlichkeit auf als Fasern mit dotiertem Kern, die ebenfalls über ein Innenbeschichtungsverfahren hergestellt wurden.

Die Erfindung wird ferner anhand von Ausführungsbeispielen näher erläutert. Die Ausführungsbeispiele entsprechen generell den in den Druckschriften (4) und (5) beschriebenen Beispielen für das PCVD-Verfahren, wobei als Dotierungsmittel statt $SiF_4$ Hexafluorethan $C_2F_6$ eingesetzt wurde.

Beispiel 1

Durch ein Quarzrohr (Länge 188 cm, Außendurchmesser 14,2 mm, Innendurchmesser 11,8 mm) wird etwa 150 Minuten lang ein konstanter $SiCl_4$-Strom von 40 sccm mit etwa 220 sccm Sauerstoff und 1 sccm $C_2F_6$ geleitet, wobei sccm der Gasfluß Q in $cm^3$ Gas pro Minute, reduziert auf Normalbedingungen, also 1 bar bei 0° C, bedeutet. Der Druck innerhalb des Rohres liegt bei etwa 10 bis 14 mbar. Während dieser Zeit wird die Rohraußenwand auf etwa 1150° C geheizt. Ein Mikrowellenresonator mit 200 W Leistungsaufnahme bewegt sich mit 3,5 m/min entlang des Rohres hin und her und induziert die Abscheidung von fluorhaltigen glasartigen Quarzschichten. Zum Schluß werden noch einige $SiO_2$-Schichten ohne $C_2F_6$-Zusatz abgeschieden. Anschließend wird das beschichtete Rohr zur Monomodefaser verarbeitet. Der Kern dieser Faser besteht wie der Mantel aus reinem Quarz. Die Zwischenschicht hat einen um etwa 0,5 bis 0,6% verringerten Brechungsindex.

Beispiel 2

Mit dem Verfahren analog zu Beispiel 1 und einer Variation der Gasphasenzusammensetzung zwischen

0,05 sccm $C_2F_6$ + 40 sccm $SiCl_4$

und

5,7 sccm $C_2F_6$ + 40 sccm $SiCl_4$

wurden Brechungsindexunterschiede zwischen 0,05% und 2,0% erzeugt.

**Patentansprüche**

1. Verfahren zur Herstellung von fluordotierten Lichtleitfasern, dadurch gekennzeichnet, daß als Fluorquelle bei einem CVD-Verfahren Hexafluorethan ($C_2F_6$) verwendet wird.

2. Verfahren nach Anspruch 1, dadurch gekennzeichnet, daß als CVD-Verfahren das Niederdruck-PCVD-Verfahren angewendet wird.

3. Anwendung des Verfahrens nach den Ansprüchen 1 und 2 auf die Herstellung von Monomode-Fasern mit einem undotierten Quarzkern, ein oder mehreren fluordotierten Zischenschichten gleichen oder verschiedenen Dotierungsgrades sowie einem undotierten Quarzmantel.

**Claims**

1. A method of manufacturing fluorine-doped optical fibres, characterized in that hexafluoroethane ($C_2F_6$) is used as a fluorine source in a CVD method.

2. A method as claimed in Claim 1, characterized in that a low-pressure PCVD method is used as the CVD method.

3. Application of the method as claimed in Claims 1 and 2 to the manufacture of monomode fibres with an undoped silica core, one or more fluorine-doped intermediate layer(s) of the same or different extents of doping, as well as an undoped silica cladding.

**Revendications**

1. Procédé pour la réalisation de fibres optiques dopées à l'aide de fluor, caractérisé en ce que de l'hexafluoroéthane ($C_2F_6$) est utilisé comme source de fluor pour un procédé CVD.

2. Procédé selon la revendication 1, caractérisé en ce que comme procédé CVD est utilisé le procédé PCVD à basse pression.

3. Application du procédé selon les revendications 1 et 2 pour la réalisation de fibres monomodes présentant un noyau en quartz non dopé, une ou plusieurs couches intermédiaires dopées à l'aide de fluor à degrés de dopage égaux ou différents ainsi qu'une gaine en quartz non dopée.

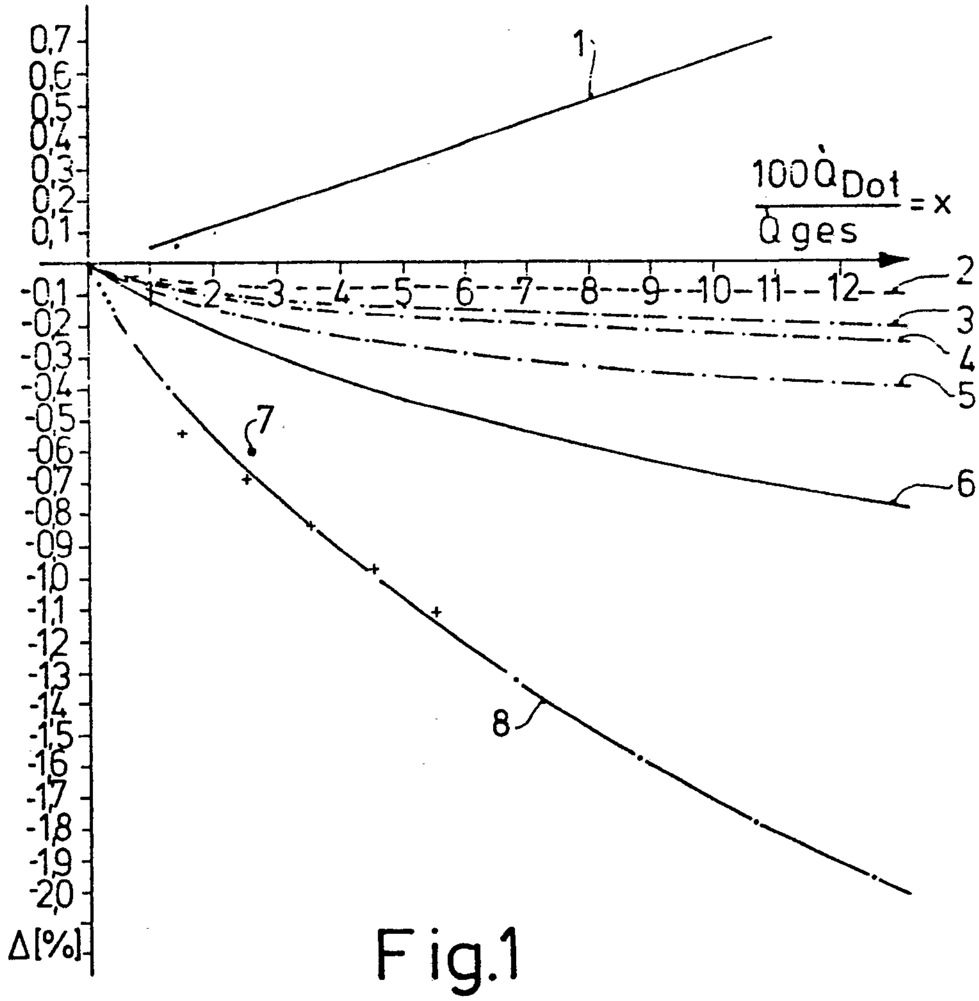
0,7
0,6
0,5
0,4
0,3
0,2
0,1
-0,1
-0,2
-0,3
-0,4
-0,5
-0,6
-0,7
-0,8
-0,9
-1,0
-1,1
-1,2
-1,3
-1,4
-1,5
-1,6
-1,7
-1,8
-1,9
-2,0
Δ[%]
1 2 3 4 5 6 7 8 9 10 11 12
$\frac{100\dot{Q}_{Dot}}{\dot{Q}_{ges}} = x$
1
2
3
4
5
6
7
8

Fig.1

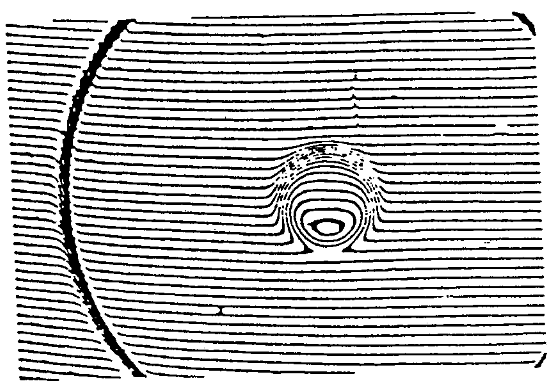

Fig. 2